# EUROPEAN PATENT SPECIFICATION

(11) **EP 3 840 565 B1**
(45) Date of publication and mention of the grant of the patent: **18.02.2026**
(21) Application number: 19853068.5
(22) Date of filing: 20.08.2019
(51) Int. Cl.: A01G 31/06, A01G 9/02, A01G 31/00, A01G 31/02, A01G 31/04, A01G 9/24

(54) **ROTARY AEROPONIC APPARATUS AND METHOD**
ROTIERENDES AEROPONISCHES GERÄT UND VERFAHREN
APPAREIL AÉROPONIQUE ROTATIF ET PROCÉDÉ ASSOCIÉ

(30) Priority: 20.08.2018 US 201862765261 P
(43) Date of publication of application: 30.06.2021
(73) Proprietor: Heliponix, LLC, Evansville, IN 47714 (US)
(72) Inventor: MASSEY, Scott, Evansville, IN 47714 (US); BALL, Ivan, Evansville, IN 47714 (US)
(74) Representative: Latscha Schöllhorn Partner AG
(86) International application number: PCT/US2019/047159
(87) International publication number: WO 2020/041242

(56) References cited:
- WO-A1-2018/068042
- GB-A- 2 066 632
- US-A- 5 404 672
- US-A1- 2008 216 403
- US-A1- 2014 000 162
- US-A1- 2016 316 646
- US-A1- 2017 049 915
- US-A1- 2017 105 372
- US-A1- 2017 347 547
- US-A1- 2018 007 845
- US-B1- 6 182 453

## Description

### CROSS REFERENCE TO RELATED APPLICATION

This application claims the benefit of U.S. Provisional Application No. 62/765,261 filed on August 20, 2018.

### TECHNICAL FIELD

This invention relates generally to an aeroponic system and more specifically to an automated rotary aeroponic system. An example of such a system is described in patent document WO 2018/068042 A1. Documents US 2014/000162 A1, US 5 404 672 A, US 2018/007845 A1, US 2016/316646 A1, US 2017/105372 A1, US 2008/216403 A1, GB 2 066 632 A constitute further relevant prior art for elements of the present disclosure.

### BACKGROUND

Gardening and farming edible produce is becoming increasingly important as the human population continues to grow and the available resources for conventional farming are reduced. More specifically, conventional farming requires large, open fields that allow a seed for a crop to be deposited in a nutrient rich soil. The seed requires the proper access to the sun, water, and any other nutrients not sufficiently available in the soil. Conventional farming is two-dimensional wherein the fields are substantially planar and only one layer of crop is typically planted in the field. Accordingly, the typical farm requires large areas of land with ample access to the sun.

Further still, only certain areas of the world provide the proper climate to cultivate certain crops. For example, the Midwestern United States may provide a climate that is ideal for crops like corn and soybeans. However, the climate in Brazil may be better suited for producing coffee and citrus fruits. Accordingly, conventional farming is limited at least by the availability of land and the climate of the region to be farmed.

Flat growing operations suffer from canopy formation, which prevents the lower leaves from receiving full light contact. The formation of a canopy often substantially restricts the plant growth because of the reduced exposure to the light source.

Accordingly, there is a need for a system that easily and efficiently creates an environment conducive to plant growth. Further still, there is a need for a system that can be implemented in urban environments to provide access to fresh crops when the proper land or climate conditions are not available naturally. The present disclosure provides several teachings that address the above concerns.

### SUMMARY

The invention is defined in the appended claims.

One embodiment of the present disclosure is a plant growing apparatus that has at least one panel separating an interior from a surrounding environment and a plant housing assembly positioned at least partially in the interior, the plant housing assembly comprising at least one growth ring that defines at least one plant opening through a radial bend in a growth ring wall.

In one example of this embodiment, the plant housing assembly contains a plurality of growth rings coupled to one another.

In another example, the growth ring further has an alignment surface defined at a top portion of the growth ring about a plant axis that has a first diameter and an overlap section defined at a bottom portion of the growth ring about the plant axis that has a second diameter. Wherein, the first diameter may deform to be slightly greater than the second diameter. In one aspect of this example, the plant housing assembly contains a first growth ring and a second growth ring, the overlap section of the first growth ring is positioned radially inside of the alignment surface of the second growth ring.

In yet another example, the growth ring has at least one tab extending radially away from the growth ring on a bottom portion and at least one notch defined axially through the growth ring wall along a top portion of the growth ring. In one aspect of this example, the plant housing assembly contains a first growth ring and a second growth ring, the tab of the first growth ring is sized to be positioned at least partially within the notch of the second growth ring to form a portion of the plant housing assembly, wherein the tab is positioned within the notch to rotationally couple the first growth ring to the second growth ring.

In another example of this embodiment, the growth ring has an alignment surface defined at a top portion of the growth ring about a plant axis that has a first diameter, an overlap section defined at a bottom portion of the growth ring about the plant axis that has a second diameter, at least one tab extending radially away from the growth ring on the bottom portion, and at least one notch defined axially through the growth ring wall along the top portion of the growth ring. In one aspect of this example, the plant housing assembly contains a first growth ring and a second growth ring, the overlap section of the first growth ring is positioned radially inside of the alignment surface of the second growth ring, and the tab of the first growth ring is sized to be positioned at least partially within the notch of the second growth ring to form a portion of the plant housing assembly. Wherein, the overlap section contacts the alignment surface to maintain coaxial alignment between the first and second growth ring and the tab is positioned within the notch to rotationally couple the first growth ring to the second growth ring.

Another example of this embodiment has a bottom portion and a top cover, wherein the at least one growth ring is positioned between the bottom portion and the top cover to define an interior passage there between. In one aspect of this example, the plant housing assembly is rotationally coupled to the plant growing apparatus through a friction reducing mechanism positioned between the bottom portion and a base plate. These friction reducing mechanisms can include, but are not limited to, ball bearings, caster wheels, a flotation assembly for the plant housing, a magnetically levitating assembly, and a low friction bushing.

Yet another example has a door that transitions from a closed position to an opened position. Wherein in the closed position the door substantially isolates an opening in the at least one panel from the surrounding environment and in the opened position the door allows access to the interior through the opening. One aspect of this example includes a sensor on the door that communicates with a controller to identify the position of the door and a light source positioned to provide light to the plant housing assembly. Wherein, the brightness of the light source is reduced when the controller identifies the door is in the opened position with the sensor to prevent eye damage of the user when the door is opened.

Another example of this embodiment and the claimed invention have a drawer positioned at a bottom portion of the plant growing apparatus, the drawer being slidable between a closed position and an opened position, wherein the drawer is configured to receive a reservoir therein to contain a fluid. One aspect of this example and the claimed invention include a pump that selectively draws fluid from the reservoir and distributes the fluid into an interior passage defined in part by the growth ring and a locking mechanism that selectively restricts the drawer from transitioning from the closed position to the opened position, wherein the locking mechanism restricts the drawer from transitioning from the closed position to the opened position when the pump is distributing fluid into the interior passage.

Yet another example of this embodiment includes a fluid system that selectively provides fluid to an interior passage of the growth ring, the fluid system comprising a pump and at least one of a nebulizer, a UV light, anode probes, and a deionizer, and an electrical system that monitors the quality and level of a fluid in the fluid system, the electrical system comprising a fluid level sensor and a flow meter.

Another embodiment of this disclosure is a system for growing plants that includes at least one panel separating an interior from a surrounding environment, a plant housing assembly that has at least one growth ring positioned between a top cover and a bottom portion to define an interior passage, a fluid system having a pump positioned to distribute a fluid from a reservoir to the interior passage, an electrical system having at least one sensor that monitors the fluid, and a controller that communicates with the fluid system and electrical system to generate an environment in the interior that promotes plant growth.

In one example of this embodiment is the electrical system includes at least a light source, a camera, and a motor that selectively rotates the plant housing assembly.

In another example of this embodiment, the fluid system has a flow meter, a deionizer, a UV light, anode probes, a fluid level sensor, a nebulizer, and a water condenser all in communication with the controller to manipulate the quality and volume of the fluid.

Yet another example of this embodiment has at least one fan that selectively provides airflow between the interior and the surrounding environment, wherein the fan has an insect resistant screen that may have an electric current running through the screen to kill any insects that the screen contacts.

Yet another embodiment of this disclosure is a method for growing plants that includes providing at least one panel separating an interior from a surrounding environment, a plant housing assembly that has at least one growth ring that defines a plant opening therein and is positioned between a top cover and a bottom portion to define an interior passage, a fluid system having a pump positioned to distribute a fluid from a reservoir to the interior passage, an electrical system having at least one sensor that monitors the fluid, and a controller that communicates with the fluid system and electrical system, coupling a power supply of the electrical system to a power source, positioning at least one plant pod within the plant opening of the growth ring, communicating, to the controller, the type of plant in the plant pod, and manipulating the environment of the interior with the electrical system and the fluid system to create an environment that promotes efficient growth of the plant in the plant pod.

### DESCRIPTION OF THE DRAWINGS

The above-mentioned aspects of the present disclosure and the manner of obtaining them will become more apparent and the disclosure itself will be better understood by reference to the following description of the embodiments of the disclosure, taken in conjunction with the accompanying drawings, wherein:
Fig. 1 is an elevated perspective view of a plant growing apparatus;
Fig. 2 is an elevated perspective view of the plant growing apparatus of Fig. 1 with a door removed;

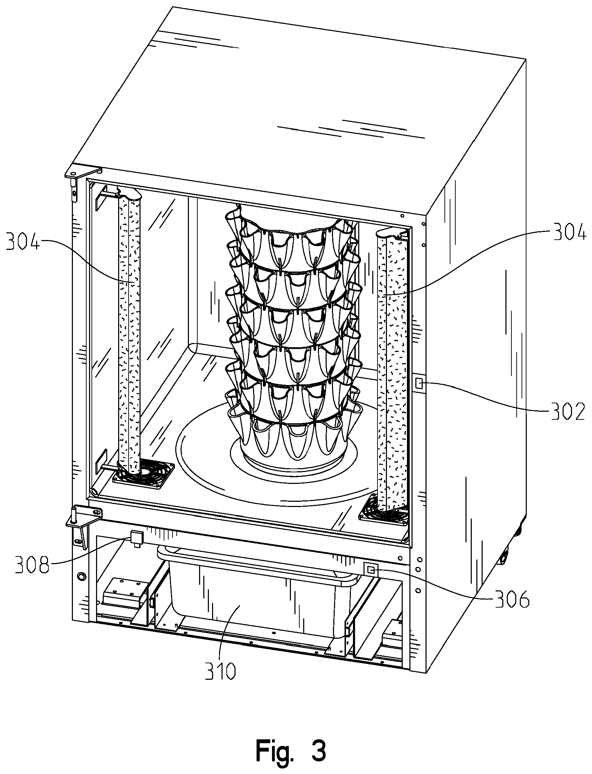

Fig. 3 is an elevated perspective view of the plant growing apparatus of Fig. 2 with a drawer face removed;

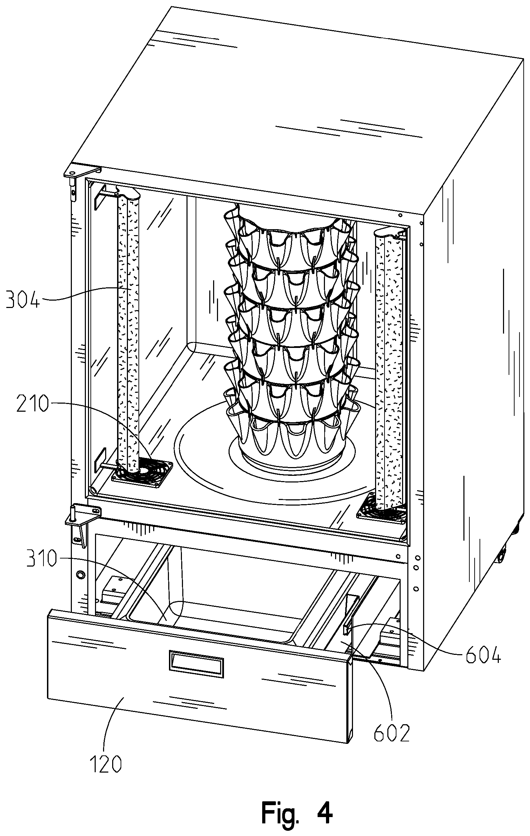

Fig. 4 is an elevated perspective view of the plant growing apparatus of Fig. 2 with a drawer in a partially opened position;
Fig. 5 is an bottom elevated perspective view of the plant growing apparatus of Fig. 1 with several components removed;

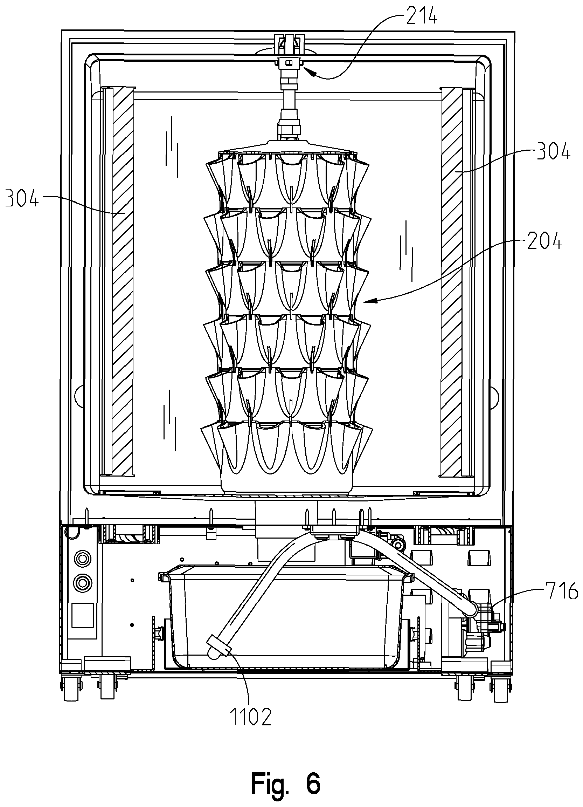

Fig. 6 is a front section view of the plant growing apparatus of Fig. 1;

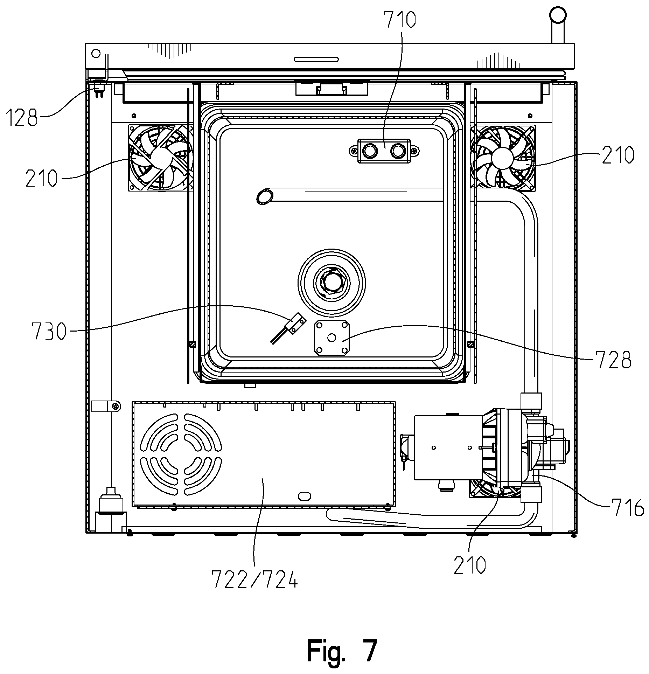

Fig. 7 is a bottom section view of the plant growing apparatus of Fig. 1;

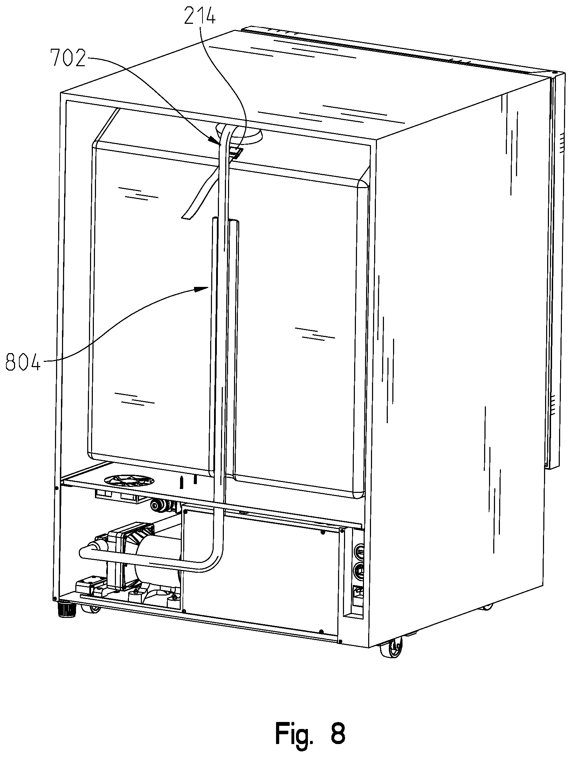

Fig. 8 is a back elevated perspective view of the plant growing apparatus of Fig. 8 with a back panel removed;
Fig. 9 is a partial side section view of the plant growing apparatus of Fig. 1;

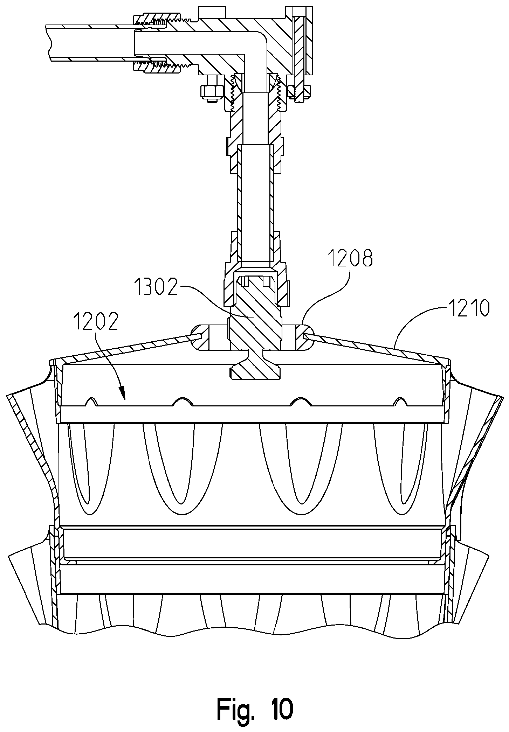

Fig. 10 is another partial side section view of the plant growing apparatus of Fig. 1;

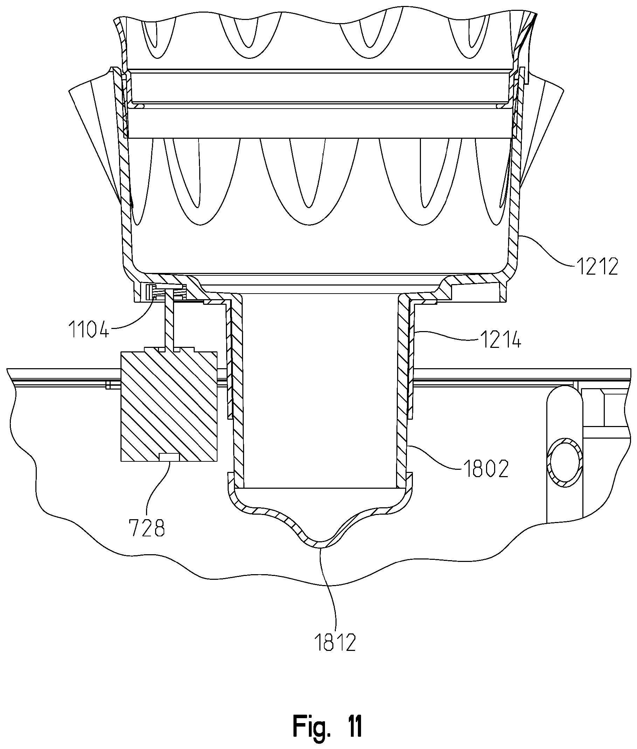

Fig. 11, is another partial side section view of the plant growing apparatus of Fig. 1;
Fig. 12 is an isolated bottom perspective view of a drive system of this disclosure;
Fig. 13 is an exploded perspective view of growth rings from the plant growing apparatus of Fig. 1;
Fig. 14 is a side view of a growth ring from the plant growing apparatus of Fig. 1; and
Fig. 15 is a section view of the growth ring of Fig. 14.

Corresponding reference numerals are used to indicate corresponding parts throughout the several views.

### DETAILED DESCRIPTION

The embodiments of the present disclosure described below are not intended to be exhaustive or to limit the disclosure to the precise forms in the following detailed description. Rather, the embodiments are chosen and described so that others skilled in the art may appreciate and understand the principles and practices of the present disclosure.

A plant growing apparatus and method are generally explained in International Publication No. WO 2018/068042 mentioned earlier. Similarly, U.S. Provisional Application No. 62/701,908 describes an automated plant growing system.

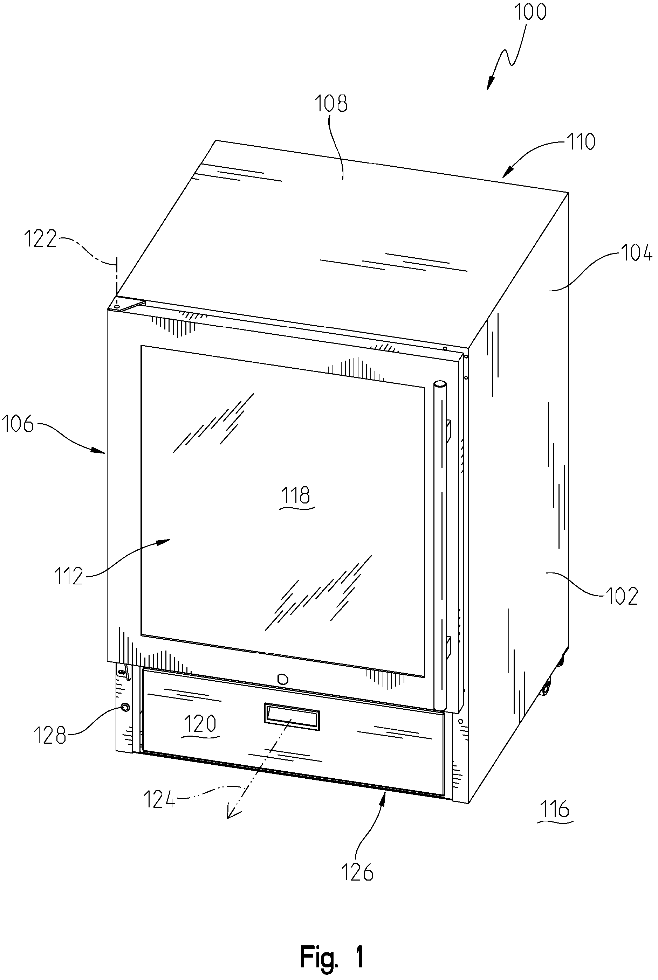

Referring now to Fig. 1, a plant growing apparatus 100 is illustrated. The plant growing apparatus 100 can be an enclosure that provides a climate-controlled interior 202 that houses at least one plant housing assembly 204. The growing apparatus 100 may have one or more panel 102 that surround the interior 202. In the non-exclusive embodiment of Fig. 1 and in the claimed invention, the plant growing apparatus 100 may be substantially rectangular in shape and has a first and second side panel 104, 106, a back panel 110, front panels 112, a top panel 108, and bottom panels 114.

While a rectangular plant growing apparatus 100 is illustrated, this disclosure is not limited to such a configuration. Rather, any three-dimensional geometric shape may be used to separate the interior 202 from a surrounding environment 116. More specifically, the plant growing apparatus 100 may have a cylindrical, hexagonal, octagonal, triangular, or the like cross-section and this disclosure considers any shape of growing apparatus 100. Accordingly, the term "panel" may is not limited to a planar member but may also include curved or cylindrical elements as well.

The growing apparatus 100 may be sized and shaped to fit in a standard residential kitchen or the like area. For example, in one non-exclusive embodiment the plant growing apparatus 100 is sized to fit into a standard base cabinet opening wherein the plant growing apparatus 100 can be positioned under a countertop. Further still other configurations considered herein may be sized and shaped like a standard refrigerator or the like wherein the plant growing apparatus 100 may occupy a similar space as a standard sized refrigerator. Further still, the teachings of this disclosure can be implemented in larger structures like buildings. In this embodiment, the plant growing apparatus 100 may be an entire building and the interior 202 may be the inside of the building. In yet another example, a shipping container could be repurposed with a plant housing positioned therein to make a modular hydroponic farm that can be easily transported. Accordingly, this disclosure considers implementing many different dimensions for the plant growing apparatus 100.

In one aspect of this disclosure, the front panels 112 may include a door 118 and a drawer 120. The door 118 may be rotationally coupled to the remaining components of the plant growing apparatus 100 about a door axis 122. Accordingly, the door 118 may rotate about the door axis 122 between a closed position as illustrated in Fig. 1 and an opened position. In the closed position, the door 118 and remaining panels 102 may substantially isolate the interior 202 from the surrounding environment 116. Alternatively, in the opened position, the door 118 may allow a user to access the interior region 202 from the surrounding environment.

In one aspect of this disclosure, the door 118 may have a door switch 302 positioned to identify when the door 118 is not in the closed position. The door switch 302 may be a reed switch or any other type sensor capable of identifying the position of the door 118. In one non-exclusive example of this disclosure, the door switch 302 may communicate with a controller 726 to identify when the door is not in the closed position. Further, the controller 726 may implement a response, such as dimming a light source 304, when the door 118 is no longer in the closed position.

Similarly, the drawer 120 may be movable between the closed position of Fig. 1 and an opened position. More specifically, the drawer 120 may move axially along a drawer axis 124 between the closed and opened positions. A drawer switch 306 may also be coupled to the plant growing apparatus 100 and communicate with the controller 726 to identify when the drawer 120 is not in the closed position. Further, the controller 726 may implement a response, such as restricting a pump flow, when the drawer 120 is no longer in the closed position.

The drawer 120 may further have a locking mechanism 308, such as a solenoid lock pin, positioned to selectively restrict the drawer 120 from moving from the closed position to the opened position. The controller 726 may communicate with the locking mechanism 308 to restrict the drawer 120 from moving to the opened position when the controller 726 determines a fluid flow is being implemented in the plant growing apparatus 100. As will be described in more detail herein, the drawer 120 may provide access to a reservoir 310 positioned therein. The reservoir 310 may be sized to capture and contain fluid distributed through the plant growing apparatus 100. When the drawer 120 is in the opened position, the reservoir 310 may no longer be positioned to properly capture fluid draining from the plant housing assembly 204. Accordingly, in one non-exclusive example of this disclosure the controller 726 may maintain the locking mechanism 308 in the locked position until the plant housing assembly 204 has had sufficient time to drain fluid therefrom into the reservoir 310.

Next to the drawer 120 may be an input 128. The input 128 may be a button or any other user selectable device that allows the user to provide instructions to the controller 726. In one non-exclusive example, the input 128 may be a button and the user may press and hold the button for a preset time limit to reset or otherwise power down the plant growing apparatus 100. While the input 128 is illustrated next to the drawer 120, other locations for the input 128 are also considered herein. For example, the input 128 may be coupled to any panel of the plant growing apparatus 100. Further still, the input 128 may be positioned inside wherein the drawer 120 must be opened to access the input 128. Further still, the input 128 may communicate any desired user preference to the controller 726 and the example provided is not meant to be exhaustive.

The reservoir 310 may sit on a drawer pan 602 to be moved between the opened and closed position. In one aspect of this disclosure, the drawer pan 602 may be a substantially fluid tight reservoir itself. More specifically, the drawer pan 602 may have a base portion and surrounding side portions that create a fluid tight sub-reservoir in which the reservoir 310 may be placed. In this configuration, the drawer pan 602 may be capable of capturing and containing a volume of fluid when the reservoir 310 is not positioned therein but fluid is dripping or otherwise flowing from the plant housing assembly 204.

The drawer pan 602 may be slidably coupled to the plant growing apparatus 100 along the drawer axis 124 via one or more slider 604. The sliders 604 may be positioned to allow the drawer pan 602 to move axially along the drawer axis 124 between the opened position and the closed position. Further, in one aspect of this disclosure the sliders 604 may have a push-to-open feature. The push-to-open feature may allow the user to transition the drawer pan 602, and in turn the reservoir 310 when placed thereon, from the closed position to the opened position by pressing the drawer 120 in an open direction 126. Once the drawer 120 is moved in the open direction 126, the sliders 604 may automatically transition the drawer 120 to a partially or fully opened position without further user contact.

The reservoir 310 may also have a tapered upper lip that is configured to minimize fluid splashing over the sidewalls of the reservoir 310. The tapered upper lip may have a profile that directs any fluid traveling up the sidewall towards the center of the reservoir 310 instead of over the sidewall. The tapered upper lip may be coupled to, or formed from, the upper edge of the reservoir 310 and substantially minimize the amount of fluid that escapes the reservoir when sloshed against the sidewalls.

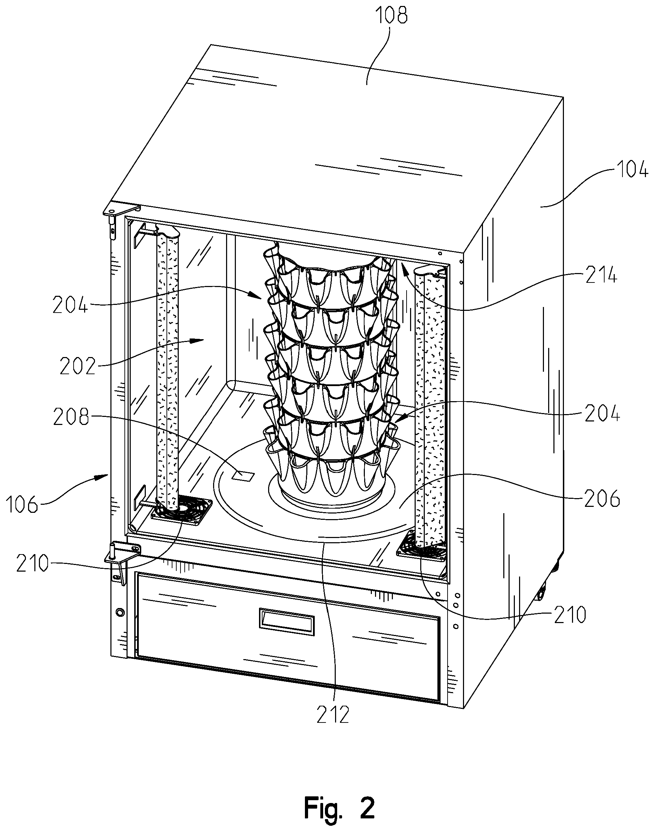

Referring now to Fig. 2, the plant growing apparatus 100 is illustrated with the door 118 removed to further illustrate the components of the interior 202. More specifically, the interior 202 may be defined by an inner surface of the door 118 (when the door is closed), a portion of an inner surface of the first side panel 104, a portion of an inner surface of the second side panel 106, an inner surface of the top panel 108, and an inner surface of a base plate 206. In one aspect of this disclosure, the base plate 206 may form a bottom support for the plant housing assembly 204. The base plate 206 may act as a barrier at least partially separating the interior 202 from the reservoir 310. Accordingly, the base plate 206 may substantially restrict debris and the like from falling from the plant harvesting assembly 204 and becoming positioned within the fluid of the reservoir 310.

In one aspect of this disclosure, the base plate 206 may have a fluid sensor 208 positioned thereon to determine whether any fluid is on the base plate 206. The plant housing assembly 204 may be configured to direct fluid through an interior passage 1202 to the reservoir 310. However, if the interior passage 1202 becomes clogged or otherwise obstructed, the fluid may flow out of the interior passage 1202 and become position on the base plate 206. Accordingly, the fluid sensor 208 may communicate with the controller 726 to identify when fluid has become positioned on the base plate 206. Further, in one non-exclusive example of this embodiment, the controller 726 may stop fluid flow through the interior passage 1202 of the plant housing assembly 204 when the fluid sensor 208 identifies fluid on the base plate 206 to prevent fluid spills or the like.

In one aspect of this disclosure, the base plate 206 may have one or more bends 212 or a shallow cone defined therein to allow the base plate 206 to be tapered towards a middle section. By tapering the base plate 206 via the bends 212, any fluid that becomes positioned thereon may flow towards the middle section. Further, the middle section may have at least one orifice or the like that allows fluid to transition from the interior 202 to the reservoir 310 through the base plate 206. With this orientation, the base plate 206 may direct fluid towards the middle section when fluid has unintentionally escaped the interior passage 1202 and become positioned thereon.

The base plate 206 may further have at least one fan assembly 210 positioned thereon. The fan assembly 210 may be selectively engaged by the controller 726 to provide airflow between the interior 202 and the surrounding environment 116. More specifically, one or more fan assembly 210 may be providing airflow into the interior 202 while one or more fan assembly 210 may be exhausting airflow out of the interior 202.

In one aspect of this disclosure, each fan assembly 210 may have an insect resistant screen or the like positioned between the fan assembly 210 and the interior. The insect resistant screen may substantially restrict any insects from entering the interior through the fan assembly 210 and compromising the plants located therein. In one non-exclusive example, the insect resistant screen may be electrified to kill any insects that encounter the insect resistant screen. The fan assembly 210 may agitate the plant to build turgor pressure for more crisp plants, pollinate plants that require fertilization, and remove heat from the interior to name a few uses for the fan assembly 210.

In another aspect of this disclosure, fans of the fan assembly 210 may be positioned to blow air on the light source 304. More specifically, the light source 304 may provide the required light to any plants in the interior 210. The light source 304 may be an LED light assembly that has a heatsink or the like and requires cooling. In this configuration, fans from the fan assembly 210 can direct airflow over the LED light assembly of the light source 304 to thereby cool the LED lights. In one non-exclusive example of this disclosure, there may be a light source 304 positioned on either side of the door 118 opening to thereby direct light towards the 204 plant housing assembly 204 and away from the door 118. In this configuration, the light source 304 may not substantially shine light out of the door opening and into the surrounding area.

As discussed herein, the fan assembly 210 may also have one or more fan that exhaust from the interior 210. The air exhausted from the interior 210 may carry various odors associated with plant fertilization and growth that are undesirable. Accordingly, in one aspect of this disclosure the exhaust fans of the fan assembly 210 may have an odor neutralizing filter thereon. The odor neutralizing filter may be any filter known in the art to reduce odor and in one non-exclusive example is a carbon filter.

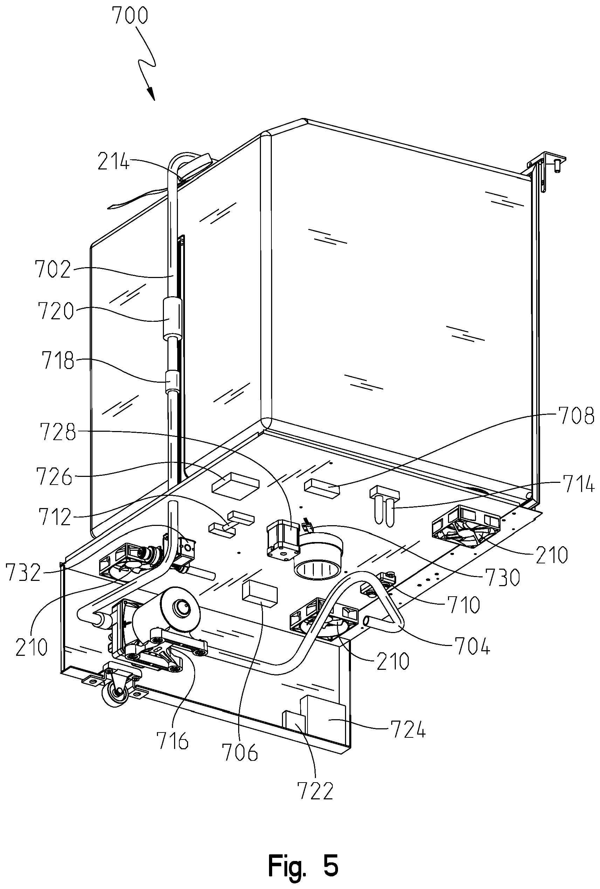

Referring now to Fig. 5, a bottom perspective view 700 is illustrated with many components removed to show components of the plant growing apparatus 100. In one non-exclusive embodiment, the fluid of the plant growing apparatus 100 may be monitored. More specifically, both the volume and quality of the fluid in the reservoir 310 and dispersed into the interior passage 1202 may be monitored to ensure the fluid conditions are optimal for plant growth.

More specifically, the plant growing apparatus 100 may have a fluid path 702 that directs fluid from a fluid inlet 704 positioned in the reservoir 310 to a nozzle 1302 that is at least partially positioned within the interior passage 1202. In one embodiment of this disclosure, the fluid system may include a water condenser 706, a nebulizer 708, a fluid level sensor 710, an ultraviolet (UV) light filter 712, anode probes 714, a pump 716, a flow meter 718, and a deionizer 720 to name a few non-exclusive examples. The fluid system may be configured to deliver the proper volume and quality of fluid to roots of any plants positioned in the plant housing assembly 204.

The pump 716 may be a high-pressure diaphragm pump that is positioned in line with the fluid path 702. The pump 716 may be capable of providing a fluid flow rate and pressure that corresponds with the nozzle 1302 to deliver fluid to the interior passage 1202. Further, the nozzle 1302 and pump 716 may be configured to deliver a mist of fluid to the interior passage 1202 at a velocity that is sufficient to degrade any biofilm forming therein without substantially harming any plant roots positioned therein. In one non-exclusive example, the nozzle 1302 may be capable of dispersing liquid in about 360 degrees to thereby ensure that biofilm is removed from all surfaces of the interior passage 1202.

Further still, the nozzle 1302 may be removably coupled to the fluid path 702 via a threaded or the like engagement thereto. In this configuration, if the nozzle 1302 is clogged or otherwise blocked with residue the user may remove the nozzle 1302 from the fluid path 702 and clean the nozzle 1302. Further still, the nozzle may be formed of a material that restricts substantial residue build-up such as stainless steel or the like.

While a high-pressure diaphragm pump is described herein, this disclosure contemplates utilizing any type of fluid pump. However, in one non-exclusive example the pump 716 is selected to limit the amount of heat added to the fluid by the pump 716. Accordingly, any fluid pump capable of providing the proper fluid pressure and flow to the fluid system without adding a substantial amount of heat is considered herein.

The flow meter 718 or switch may also be fluidly coupled to the fluid path 702 and configured to communicate a flow rate of the fluid through the fluid path 702 to the controller 726. The flow meter 718 may be any type of flow meter known in the art and the controller 726 may monitor the flow meter 718 to identify how efficiently the pump 716 is performing. More specifically, in one embodiment the controller 726 may monitor the flow meter 718 when the pump 716 is instructed to be providing fluid to the nozzle 1302. If the controller 726 instructs the pump 716 to provide fluid to the nozzle 1302, the controller 726 may then monitor the flow rate of the fluid through the fluid path 702 with the flow meter 718 to ensure that the fluid system is functioning properly. For example, if the controller 726 instructs the pump 716 to provide fluid to the nozzle 1302, but then identifies a flow rate with the flow meter 718 that is less than a flow threshold, the controller 726 may indicate a warning to the user or stop the fluid system. The reduced flow rate could be indicative of a clogged or malfunctioning pump 716 among other things.

In one aspect of this disclosure, the fluid path 702 may travel through a channel 804 defined in a back panel assembly. More specifically, the back panel 110 may be formed from an interior panel and an exterior panel that has insulation there between. The fluid path 702, along with electrical wiring for the electrical system, may travel along the channel 804 defined in the back panel 110. The channel 804 may be formed by placing a placeholder along the channel 804 before insulation is added between the interior and exterior panel. Then, after insulation is added between the two panels, the placeholder is removed and the channel 804 is exposed. The fluid path 702 and electrical wiring may then be positioned along the back panel 110 between the interior and exterior panels.

The fluid level of the reservoir 310 may also be monitored by the fluid level sensor 710 to ensure the reservoir 310 contains the proper volume of fluid. In one non-exclusive example, the fluid level sensor 710 may be an ultrasonic sensor positioned above the reservoir to identify the level of fluid therein. However, any type of fluid level sensor 710 is also considered. The fluid level sensor 710 may communicate with the controller 726 to identify when the reservoir 310 requires more fluid. When the controller 726 identifies that the reservoir 310 is low, the controller 726 may engage a source to provide fluid thereto.

The source of fluid for adding fluid to the reservoir 310 may be any fluid source. In one non-exclusive example, the source of fluid may be a fluid line that is coupled to a local water system. In one non-exclusive example, a solenoid valve 732 may selectively provide fluid from the local water system to the reservoir 310 when low fluid levels are identified. Alternatively, one embodiment contemplated herein utilizes the water condenser 706 to condense water out of the surrounding atmosphere and direct it to the reservoir 310 when the controller 726 instructs it to do so. In this configuration, when the controller 726 identifies the reservoir 310 is low via the fluid level sensor 710, the controller 726 may engage the water condenser 706 to condense water from the surrounding atmosphere to thereby fill the reservoir 310 to the proper level.

In one aspect of this disclosure, the fluid system may have one or more fluid filters therein. More specifically, the plant growing apparatus 100 may be specifically used for growing edible plants that are intended to be consumed. Accordingly, the cleanliness and sanitation of the fluid may be monitored by the fluid system. The nebulizer 708 may implement sound waves or the like that are specifically sized to break down bacteria within the fluid. The nebulizer 708 may be positioned at a location within the fluid system that causes the fluid therein to pass by the nebulizer 708 thereby exposing any bacteria to the sound waves produced by the nebulizer 708.

The UV light 712 may be another fluid filter positioned within the fluid system. The UV light 712 may be positioned above the reservoir 310 to expose the fluid contents of the reservoir 310 to UV light. The UV light 712 may emit light into the fluid of the reservoir to thereby destroy undesired microorganisms or bacteria that are located therein. In one non-exclusive example, the UV light 712 may be of a spectrum sufficient to kill e-coli or the like.

Similarly, the anode probes 714 may be positioned within the fluid of the reservoir 310 or otherwise along the fluid path 702 to further purify the fluid therein. The anode probes 714 may include silver and copper anode probes that are positioned to sterilize the water when a current is supplied thereto. Further providing current to the silver and copper anode probes 714 may prevent bacterial outbreaks such as Legionella or the like in the fluid of the plant growing apparatus 100.

While several fluid cleansing devices are described herein, this disclosure contemplates utilizing any type of fluid cleansing system that may provide a more sterile and sanitary fluid in the fluid system. As described above, the plant growing apparatus 100 may frequently be used to grow edible plants for consumption. Accordingly, the fluid and interior 202 may be specifically design to maintain a sanitary and food-safe environment as described herein.

A power supply 724 or the like may provide power to an electrical system of the plant growing apparatus 100. More specifically, the power supply 724 may be configured to be electrically coupled to an electric power supply, a solar panel, or any other known electrical power supply to provide power to the electrical system. In one no-exclusive example, the power supply 724 may be electrically coupled to a battery 722 or other energy storage device to thereby allow the power to be provided to the electrical system even when the power supply 724 is not coupled to a power source. The battery 722 may be charged when the power supply 724 is coupled to a power source and the stored power of the battery 722 may be utilized when the power supply 724 is no longer coupled to a power source.

The electrical system may provide power to the water condenser 706, nebulizer 708, fluid level sensor 710, UV light 712, anode probes 714, pump 716, flow meter 718, deionizer 720, light source 304, and a camera 214 to name a few non-exclusive components of the electrical system. Further the controller 726 may selectively power the components of the electrical system to create an interior 202 that is conducive to efficient and plentiful plant growth.

The controller 726 may also be in communication with a plant motor 728 that is coupled to the plant housing assembly 204. The controller 726 may selectively power the plant motor 728 to rotate the plant housing assembly 204 about a plant axis 1204 to transition the plants being exposed to the light source 304. Further still, in one aspect of this disclosure a plant sensor 730 may be positioned to identify the rotation of the plant housing assembly 204. More specifically, the plant sensor 730 may be a reed switch that is positioned adjacent a cammed rotation disk. The cammed rotation disk may have recessed portions that interact with the plant sensor 730 to communicate to the controller 726 that the plant housing assembly 204 has rotated a predefined amount. In one non-exclusive embodiment, the controller 726 may utilize the camera 214 to take and store or otherwise transmit a photo of the plant hanging assembly 204 responsive to the rotational position of the plant hanging assembly 204 as identified by the plant sensor 730.

In yet another embodiment, a magnet in the plant hanging assembly 204 may pass by a sensor coupled to the base plate 206 to identify the rotational orientation of the assembly 204. In another embodiment, the plant sensor 730 may be a mechanical switch that pushes up when it comes into contact with a recessed cavity on a corresponding surface to identify rotation. Yet another embodiment may utilize a photo sensor that sees a specific color or reflective material on the assembly 204. In one aspect of this embodiment, the camera 214 may identify specific colors or features on the assembly 204 to determine rotation. In yet another embodiment, the sensor 730 may be a laser that is able to measure the distance change in a recessed cavity on a corresponding surface to identify rotation. Similarly, the sensor 730 may be a sonar sensor that is able to measure the distance in a recessed cavity on a corresponding surface to identify rotation. The sensor 730 may also identify a physical protrusion that switches a mechanical switch as it rotates by. Further still, the sensor 730 may be a rotary encoder. In yet another embodiment, the rotation of the assembly may be determined by counting the steps from a stepper motor and using a software algorithm to determine rotation based on a known gear ratio.

In one aspect of this disclosure, a weighted tip 1102 is illustrated on the fluid inlet 704. The weighted tip 1102 may be formed of a material that is heavy enough to cause the weighted tip 1102 to become positioned along a bottom portion of the reservoir 310 when positioned thereunder. In this configuration, the weighted tip 1102 may ensure that the fluid inlet 704 remains submerged in any fluid within the reservoir 310 to thereby substantially restrict air from being introduced into the fluid path 702. Further, the fluid inlet 704 and weighted tip 1102 may be positioned to easily transition into, and out of, the reservoir 310 as the drawer 120 is opened and closed. Alternatively, a bulkhead fitting could be coupled to a check valve to constantly pull fluids from the bottom of the reservoir 310. The check valve could prevent the reservoir 310 from leaking from the bulkhead fitting when the reservoir 310 is removed from the drawer 120

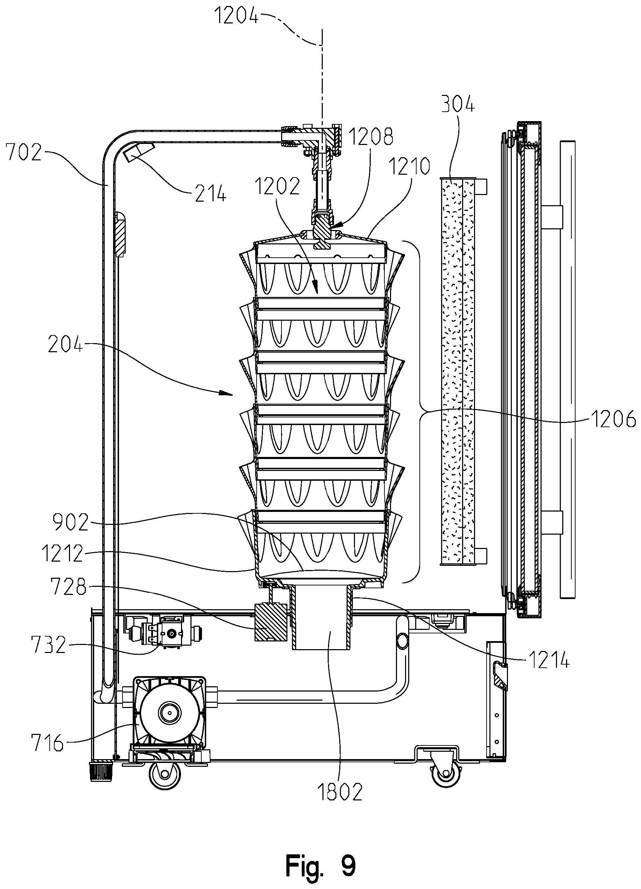

Referring now to Fig. 9, a half section view of a portion of the plant housing assembly 204 is illustrated. The plant housing assembly 204 may include a plurality of growth rings 1206 coupled to one another to define the interior passage 1202. Further, the growth rings 1206 may be rotationally coupled to the plant growing apparatus 100 about the plant axis 1204. In this configuration, a grommet 1208 or the like may be positioned around a top through-hole of a top cover 1210. The grommet 1208 may substantially restrict fluid or the like from exiting the top through-hole while allowing the top cover 1210 to rotate about the plant axis 1204.

A bottom portion 1212 may be coupled to the bottommost growth ring 1206 and be configured to be manipulated by the plant motor 728 to rotate the plant housing assembly 204. More specifically, the bottom portion may have a drain member 1802 (Fig. 9) extending along the plant axis 1204 to provide a location for fluid to drain from the interior passage 1202 to the reservoir 310. In one aspect of this disclosure, a cover 1812 may be positioned over the drain member 1802 to manipulate the fluid flow introduced to the reservoir 310. The cover 1812 may act like a funnel to reduce the outlet size and thereby alter the fluid flow pattern of fluid through the bottom portion 1212. The cover 1812 may be configured to reduce splashing caused by fluid entering the reservoir from the bottom portion 1212.

The bottom portion 1212 may also have a strainer 902 or the like positioned over the drain member 1802. The strainer 902 may be sized to substantially cover the drain member and allow fluid to pass from the interior passage 1202 there through and into the drain member 1802. However, the strainer 902 may be sized to substantially restrict plant material from passing there through. In this configuration, the strainer 902 may prevent plant material buildup, such as roots, from blocking the drain member 1802 while allowing fluid to continually flow there through. In one non-limiting example, the strainer 902 may have a dome-like shape that extends away from the drain member 1802. Further, the strainer 902 may have a plurality of opening sized to allow fluid but not substantial plant matter there through.

In one aspect of this disclosure, a friction reducing mechanism 1214 may be coupled to the bottom portion 1212 between the bottom portion 1212 and the base plate 206. The friction reducing mechanism 1214 may be any mechanism that reduces friction to allow the plant housing assembly 204 to rotate easily about the plant axis 1204. More specifically, the friction reducing mechanism 1214 may be a nylon bushing or the like in one non-exclusive example. Further, in another non-exclusive example the friction reducing mechanism 1214 may be a slew bearing or the like. In yet another embodiment, the bottom portion 1212 may be floating in a fluid and capable of rotating therein. In yet another embodiment, the friction reducing mechanism 1214 may be a magnetic bearing. Accordingly, any known type of friction reducing mechanism is contemplated herein to be utilized between the bottom portion 1212 and the base plate 206.

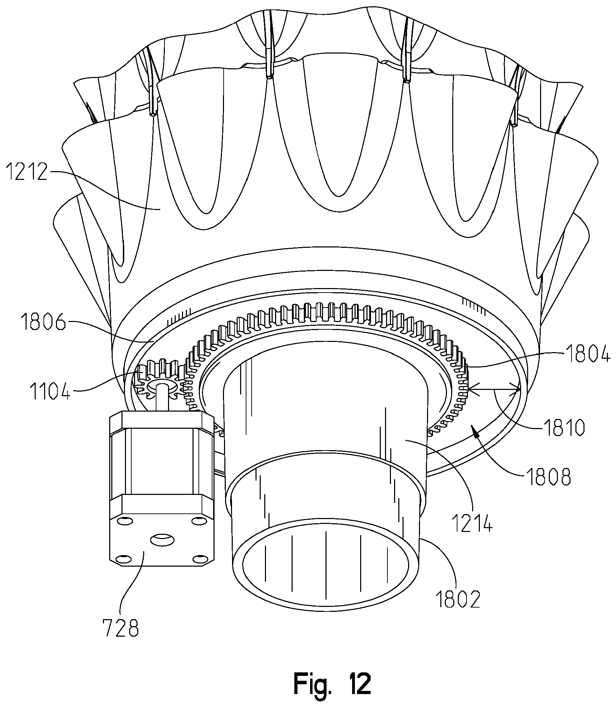

Referring now to Fig. 12, a bottom portion 1212 is illustrated in a perspective view of a bottom side. The bottom side may have the drain member 1802 that is sized to direct fluid to the reservoir 310 and provide for rotating the plant housing assembly 204 about the plant axis 1204. In the embodiment of Fig. 12, the bottom portion 1212 may have gear 1804 embedded therein about the plant axis 1204. The gear 1804 may be sized to engage a plant motor gear 1104 coupled to the plant motor 728 to thereby allow the plant motor 728 to rotate the plant housing assembly 204 by interacting with the gear 1804.

In another aspect of the bottom portion 1212 illustrated in Fig. 12 a ring 1806 may be defined about the plant axis 1204. The ring 1806 may be a substantially circular extension from a bottom surface 1808 of the bottom portion 1212. Further, the ring 1806 may be spaced radially away from the embedded gear 1804 a ring distance 1810 that is slightly greater than the diameter of the plant motor gear. In this configuration, the plant motor gear may become positioned in an annular channel of the bottom portion 1212 defined between the gear 1804 and the ring 1806. The ring 1806 may substantially prevent debris or the like from being positioned between the gear 1804 and the plant motor gear as the plant motor 728 rotates the plant housing assembly 204.

In another non-exclusive example, the bottom portion 1212 may have a spiraled extrusion extending from a bottom surface. The spiraled extrusion may have a contact point defined thereon and configured to interact with a solenoid. The solenoid may replace the plant motor 728 and rotate the bottom portion 1212 by pressing the contact point of the spiraled extrusion. In other words, the solenoid may extend and contract on a cyclic pattern to contact the spiraled extrusion and rotate the plant housing assembly 204 with each cycle.

Further still, in yet another embodiment the plant housing assembly 204 may be mechanically coupled to a wind turbine. In this configuration, the wind turbine may rotate when wind acts thereon. Further, the rotation of the wind turbine may be translated to rotate the plant housing assembly 204 via one or more linkage and gear assembly.

The bottom-most growth ring 2102 may be coupled to the bottom portion 1212 by having an overlap section (similar to overlap section 2104) that is radially inside of an outer wall of the bottom portion 1212. Further, each growth ring 1206 may have a similarly sized overlap section 2104 to thereby allow any growth ring 1206 to be coupled to the bottom portion 1212. Further still, the bottom portion 1212 may have notches defined therein to correspond with tabs of the growth rings 1206 and thereby rotationally couple the adjacent growth ring 1206 to the bottom portion 1212 when properly positioned therein.

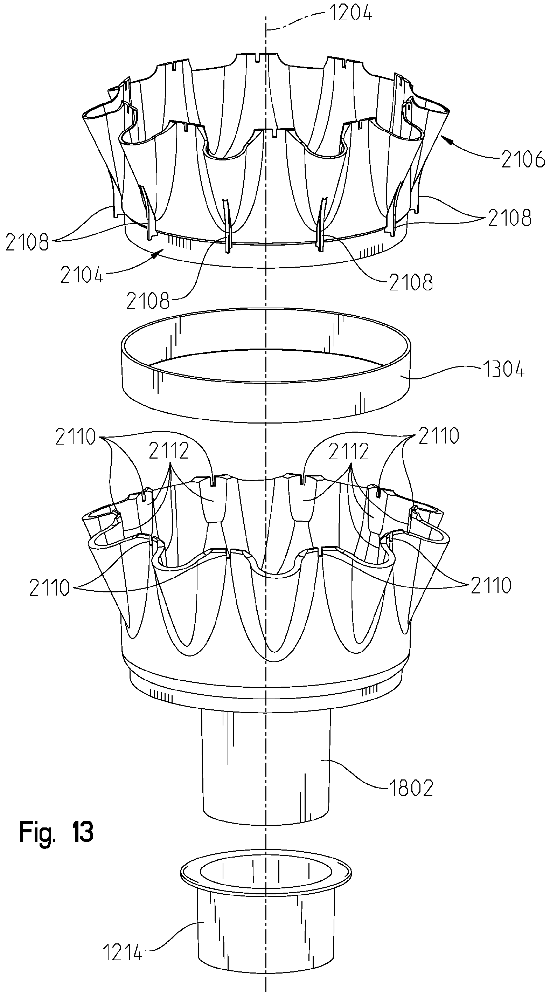

Illustrated in Fig. 13 is a growth ring 2106 spaced axially away from an adjacent growth ring 2106 along the plant axis 1204. Each growth ring 1206 may have at least one a tab 2108 defined along a bottom portion that is sized to correspond with a notch 2110 on the top portion of the adjacent growth ring 2106. The tab 2108 may at least partially extend into the notch 2110 of the adjacent growth ring when the overlap section is positioned within the adjacent growth ring 2106. The overlap section 2104 may contact alignment surfaces 2112 of the adjacent growth ring 2106 when positioned therein to ensure that adjacent growth rings 2106 remain coaxial with the plant axis 1204.

Further, when adjacent growth rings 2106 are properly coupled to one another, the tabs 2108 may be at least partially positioned within the corresponding notches 2110 to substantially rotationally couple the adjacent growth rings 2106 to one another. In other words, when adjacent growth rings 2106 are properly coupled to one another, the contact between the overlap section 2104 and the alignment surface 2112 may maintain the coaxial alignment of the growth rings 2106 while the contact between the tabs 2108 and the notches 2110 may rotationally couple the growth rings to one another.

Similarly, the overlap section 2104 may ensure that any fluid dispersed by the nozzle 1302 is maintained within the interior passage 1202 until the fluid reaches the drain member 1802 of the bottom portion 1212. In one aspect of this disclosure, the overlap section may have a bottom lip 1506 that extends radially inward therefrom. The bottom lip 1506 may further prevent fluid from escaping the interior passage 1202 by directing the fluid towards the plant axis 1204. In other words, the growth rings 1206 nest into one another so that fluid dispersed in the interior passage 1202 will naturally flow to the bottom portion and then into the reservoir 310.

In another aspect of this disclosure, a gasket 1304 or the like may be positioned around the overlap section 2104 to further ensure adjacent growth rings 2106 are properly coupled to one another. The gaskets 1304 may be substantially cylindrical and positioned between the overlap section 2104 and the alignment surface 2112. The gaskets 1304 may be formed of a silicon or the like material. Further, the gaskets 1304 may be antimicrobial to ensure the gaskets 1304 maintain a sterile environment along the interior passage.

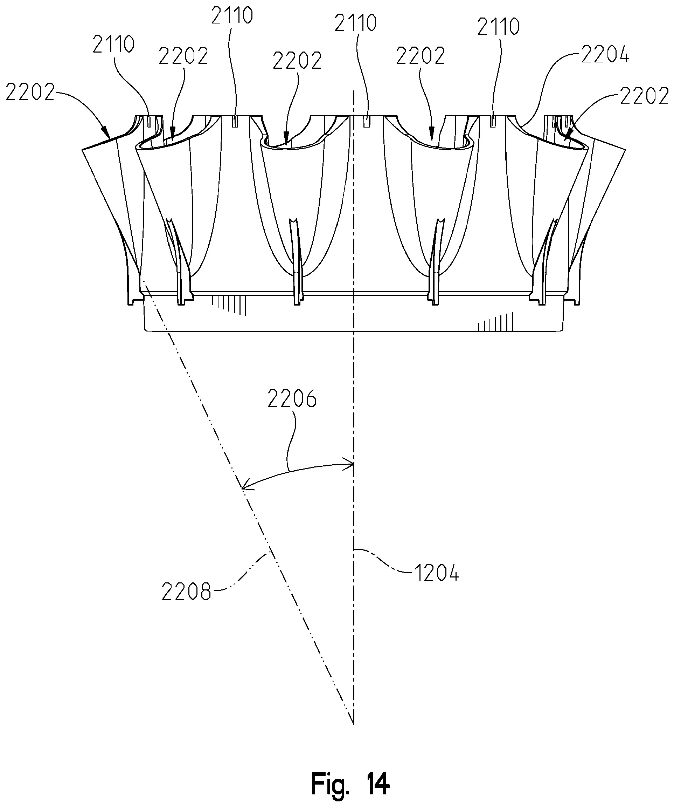

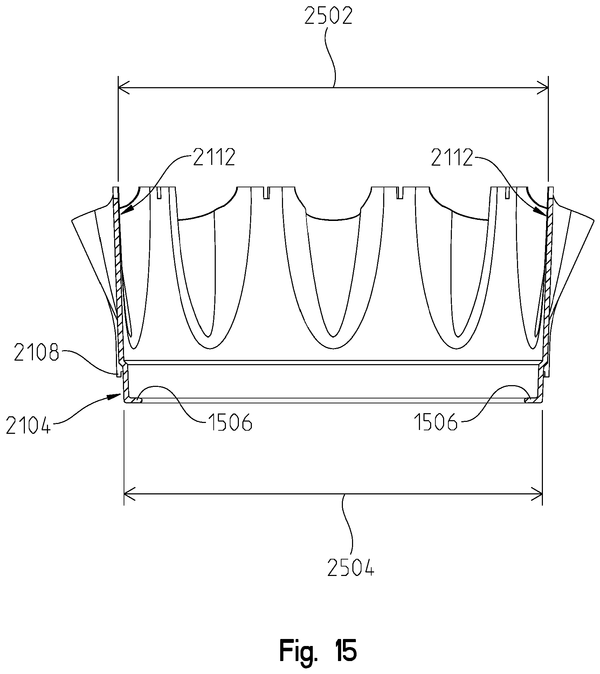

Referring now to Figs. 14-15 , the form of the growth rings 1206 is explained in more detail. More specifically, the upper-most portion of each growth ring 1206 may have a first inner diameter 2502 defined by the alignment surfaces 2112. The first inner diameter 2502 may be about the same as a second outer diameter 2504 of the overlap section 2104. In this orientation, adjacent growth rings 1206 may be coupled to one another as described herein. Further still, the alignment surfaces 2112 may be configured to elastically deform radially away from the plant axis 1204 responsive to contact with the overlap section 2104. Accordingly, the overlap section 2104 can be forced into the alignment surfaces 2112 to thereby cause the alignment surfaces 2112 to expand radially away from the plant axis 1204 and thereby frictionally coupled the growth rings 1206 to one another.

In the embodiment that utilizes gaskets between the alignment surfaces 2112 and the overlap section 2104 the first inner diameter 2502 and the second outer diameter 2504 may be correspondingly sized. More specifically, if the gasket has a one-eighth inch thickness, the two diameters 2502, 2504 may be sized to allow for about a one-eight inch gasket to fit there between.

According to the claimed invention, each growth ring 1206 has a plurality of plant openings 2202 defined therein. Each plant opening 2202 is configured to accommodate a plant pod therein to position at least a portion of the plant pod at least partially within the interior passage 1202. The plant openings 2202 is shaped from portions of a growth ring wall 2204 that are radially expanded from the plant axis 1204. More specifically, each plant opening may be a radial expansion that has an outer profile that defines an axis 2208 that is angled a plant opening angle 2206 relative to the plant axis 1204. Accordingly, as the plant openmg 2202 approaches that uppermost portion of the growth ring 1206, the plant openmg 2202 may extend farther radially away from the plant axis 1204. In this orientation, the plant pods can be easily placed and maintained in the plant openings 2202

In other words, in the claimed invention, the plant openings 2202 are formed from a circular wave-like pattern defined in by the growth ring wall 2204 along the perimeter. In this configuration, the growth rings 1206 may be formed from injection molding or be stamped in a die. However, any other known manufacturing process is also considered herein, and this disclosure considers any known method of manufacturing the growth rings 1206.

The number of plant openings 2202 defined by the growth ring 1206 may vary depending on the type of plant being positioned therein. Accordingly, a growth ring for large plants may have fewer plant openings than a growth ring for smaller plants. Similarly, any number of growth rings 1206 may be coupled to one another to form the plant housing assembly 204 to accommodate the height of the plant growing apparatus 100. For example, a taller plant growing apparatus 100 may require a greater number of growth rings 1206 than a comparatively shorter growing apparatus 100. The number of growth rings 1206 can be any number sufficient to allow the interior passage 1202 to extend from the top cover 1201 to the bottom portion 1212. Further, cylindrical spacers may also be utilized therein to provide the proper axial distance between the top cover 1201 and the bottom portion 1212 when plant openings are not needed the entire height of the plant housing assembly. In one aspect of this disclosure, a stopper may be positioned in any of the plant openings 2202 that are not filled with a pod.

In one non-exclusive example of an application of the present disclosure, a user may purchase a plant growing apparatus 100 and install it in a base cabinet space similar to a mini-refrigerator or the like. The power supply 724 may be electrically coupled to a local power grid and a water source may be selectively coupled to the reservoir 310 via the controller. The user may then stack the appropriate number and type of growth rings between the top cover 1201 and the bottom portion 1212. Next, the user may populate the plant openings of the growth rings with the types of plant pods the user intends to grow. The controller 726 may automatically identify the plant pods positioned therein by communicating with the plant pods via wireless communication. Next, the controller 726 may utilize the fluid and electrical systems described herein to generate an interior 202 that is ideal for growing the plants identified in the plant pods.

While the disclosure has been illustrated and described in detail in the drawings and foregoing description, such illustration and description is to be considered as exemplary and not restrictive in character, it being understood that illustrative embodiment(s) have been shown and described. The invention is defined in the appended claims.

In another embodiment of this disclosure, the drain member 1802 may be sized to fit into a standard conduit fitting. As one non-exclusive example, the drain member 1802 may fit into a T-type polyvinyl chloride ("PVC") connector. In this configuration, a PVC drainage conduit can be formed with one or more T-type fittings that allow the drain members 1802 to be coupled thereto. Accordingly, several plant housing assemblies 204 may be fluidly coupled to a single drainage conduit. Further still, each plant housing assembly 204 may have a nozzle 1302 that provides fluid to each plant housing assembly 204. The plant housing assemblies 204 may be fixedly coupled to the drainage conduit and further a support line may provide additional support to the plant housing assemblies 204 and fluid lines for the nozzles 1302. In this embodiment, any number of plant housing assemblies 204 may be fluidly coupled to the drainage conduit and fluid lines.

## Claims

1. A plant growing apparatus (100), comprising:
a first and second side panel (104, 106), a back panel (110), a front panel (112), a top panel (108) and a bottom panel (114) separating an interior (202) from a surrounding environment;
a plant housing assembly (204) positioned at least partially in the interior (202), the plant housing assembly (204) comprising at least one growth ring (1206, 2106)) that is positioned between a bottom portion (1212) and a top cover (1210) to define an interior fluid passage (1202) therebetween, the at least one growth ring defining a plurality of plant openings (2202)
the plant openings (2202) being configured to accommodate a plant pot therein to position at least a portion of the plant pod at least partially within the interior fluid passage (1202) wherein the plant openings are shaped from portions of the growth ring wall (2204) that are radially expanded from a plant axis (1204) and form a circular wave-like pattern in the growth ring wall (2204) along the perimeter;
a drawer (120, 602) positioned at a bottom portion of the plant growing apparatus (100), the drawer being slidable between a closed position and an opened position, wherein the drawer is configured to receive a reservoir therein to contain a fluid;
a pump (716) that selectively draws fluid from the reservoir and distributes the fluid into the interior fluid passage (1202) defined in part by the growth ring (1206); and
a locking mechanism that selectively restricts the drawer (120, 602) from transitioning from the closed position to the opened position; wherein the locking mechanism restricts the drawer from transitioning from the closed position to the opened position when the pump (716) is distributing fluid into the interior passage (1202).

2. The plant growing apparatus (100) of claim 1, further wherein the plant housing assembly (204) contains a plurality of growth rings (1206, 2106) coupled to one another.

3. The plant growing apparatus (100) of claim 1, further wherein the growth ring (1206, 2106) further comprises:
an alignment surface (2112) defined at a top portion of the growth ring (1206, 2106) about the plant axis (1204) and having a first diameter; and
an overlap section (2104) defined at a bottom portion of the growth ring about the plant axis (1204) and having a second diameter;
wherein, the first diameter is slightly greater than the second diameter.

4. The plant growing apparatus (100) of claim 3, further wherein the plant housing assembly (204) contains a first growth ring (1206, 2106) and a second growth ring (1206, 2106), the overlap section (2104) of the first growth ring is positioned radially inside of the alignment surface (2112) of the second growth ring.

5. The plant growing apparatus (100) of claim 1, further wherein the growth ring (1206, 2106) further comprises:
at least one tab (2108) extending radially away from the growth ring on a bottom portion; and
at least one notch (2110) defined axially through the growth ring wall along a top portion of the growth ring.

6. The plant growing apparatus (100) of claim 5, the further wherein the plant housing assembly (204) contains a first growth ring (1206, 2106) and a second growth ring (1206, 2106), the tab (2108) of the first growth ring is sized to be positioned at least partially within the notch (2110) of the second growth ring to form a portion of the plant housing assembly (204), wherein the tab (2108) is positioned within the notch (2110) to rotationally couple the first growth ring to the second growth ring.

7. The plant growing apparatus (100) of claim 1, further wherein the growth ring (1206, 2106) further comprises:
an alignment surface (2112) defined at a top portion of the growth ring about the plant axis (1204) and having a first diameter;
an overlap section (2104) defined at a bottom portion of the growth ring about the plant axis (1204) and having a second diameter;
at least one tab (2108) extending radially away from the growth ring on the bottom portion; and
at least one notch (2110) defined axially through the growth ring wall along the top portion of the growth ring.

8. The plant growing apparatus (100) of claim 7, further wherein:
the plant housing assembly (204) contains a first growth ring (1206, 2106) and a second growth ring (1206, 2106);
the overlap section (2104) of the first growth ring is positioned radially inside of the alignment surface (2112) of the second growth ring; and
the tab (2108) of the first growth ring is sized to be positioned at least partially within the notch (2110) of the second growth ring to form a portion of the plant housing assembly (204);
wherein, the overlap section (2104) contacts the alignment surface (2112) to maintain coaxial alignment between the first and second growth ring and the tab (2108) is positioned within the notch (2110) to rotationally couple the first growth ring to the second growth ring.

9. The plant growing apparatus (100) of claim **1,** further wherein the plant housing assembly (204) is rotationally coupled to the plant growing apparatus through a friction reducing mechanism (1214) positioned between the bottom portion and a base plate (206).

10. The plant growing apparatus (100) of claim 1, further comprising a door (118) that transitions from a closed position to an opened position, wherein in the closed position the door (118) substantially isolates an opening in the front panel (112) from the surrounding environment and in the opened position the door allows access to the interior through the opening.

11. The plant growing apparatus (100) of claim 10, further comprising:
a sensor (208) on the door (118) that communicates with a controller (726) to identify the position of the door; and
a light source (304) positioned to provide light to the plant housing assembly (204);
wherein, the brightness of the light source (304) is reduced when the controller identifies the door (118) is in the opened position with the sensor (208).

12. The plant growing apparatus (100) of claim 1, further comprising:
a fluid system that selectively provides fluid to the interior fluid passage (1202) of the growth ring (1206, 2106), the fluid system comprising a pump (716) and at least one of a nebulizer, a UV light, anode probes, and a deionizer; and
an electrical system that monitors the level of a fluid in the fluid system, the electrical system comprising a fluid level sensor (710) and a flow meter (718).

## Patentansprüche

1. Eine Pflanzenzuchtvorrichtung (100), bestehend aus:
einer ersten und zweiten Seitenwand (104, 106), einer Rückwand (110), einer Vorderwand (112), einer Oberwand (108) und einer Unterwand (114), die einen Innenraum (202) von einer Umgebung trennen;
eine Pflanzenaufnahmevorrichtung (204), die zumindest teilweise im Innenraum (202) positioniert ist, wobei die Pflanzenaufnahmevorrichtung (204) mindestens einen Wachstumsring (1206, 2106) umfasst, der zwischen einem Bodenabschnitt (1212) und einer oberen Abdeckung (1210) positioniert ist, um einen inneren Flüssigkeitskanal (1202) dazwischen zu definieren, wobei der mindestens eine Wachstumsring eine Vielzahl von Pflanzenöffnungen (2202) definiert ,
wobei die Pflanzenöffnungen (2202) so konfiguriert sind, dass sie einen Pflanzentopf aufnehmen können, um zumindest einen Teil des Pflanzentopfs zumindest teilweise innerhalb des inneren Flüssigkeitskanals (1202) zu positionieren, wobei die Pflanzenöffnungen aus Teilen der Wachstumsringwand (2204) gebildet sind, die von einer Pflanzenachse (1204) radial erweitert sind und ein kreisförmiges, wellenartiges Muster in der Wachstumsringwand (2204) entlang des Umfangs bilden;
eine Schublade (120, 602), die an einem unteren Abschnitt der Pflanzenzuchtvorrichtung (100) positioniert ist, wobei die Schublade zwischen einer geschlossenen Position und einer geöffneten Position verschiebbar ist, wobei die Schublade so konfiguriert ist, dass sie einen Behälter aufnehmen kann, der eine Flüssigkeit enthält;
eine Pumpe (716), die selektiv Flüssigkeit aus dem Reservoir ansaugt und die Flüssigkeit in den inneren Flüssigkeitskanal (1202) verteilt, der teilweise durch den Wachstumsring (1206) definiert ist; und
einen Verriegelungsmechanismus, der den Übergang der Schublade (120, 602) von der geschlossenen Position in die geöffnete Position selektiv einschränkt; wobei der Verriegelungsmechanismus den Übergang der Schublade von der geschlossenen Position in die geöffnete Position einschränkt, wenn die Pumpe (716) Flüssigkeit in den inneren Flüssigkeitskanal (1202) verteilt.

2. Die Pflanzenzuchtvorrichtung (100) nach Anspruch 1, wobei die Pflanzenaufnahmevorrichtung (204) ferner eine Vielzahl von miteinander verbundenen Wachstumsringen (1206, 2106) enthält.

3. Die Pflanzenzuchtvorrichtung (100) nach Anspruch 1, wobei der Wachstumsring (1206, 2106) ferner umfasst:
eine Ausrichtungsfläche (2112), die an einem oberen Abschnitt des Wachstumsrings (1206, 2106) um die Pflanzenachse (1204) herum definiert ist und einen ersten Durchmesser aufweist; und
einen Überlappungsabschnitt (2104), der an einem unteren Abschnitt des Wachstumsrings um die Pflanzenachse (1204) herum definiert ist und einen zweiten Durchmesser aufweist;
wobei der erste Durchmesser geringfügig größer ist als der zweite Durchmesser.

4. Die Pflanzenzuchtvorrichtung (100) nach Anspruch 3, wobei die Pflanzenaufnahmevorrichtung (204) einen ersten Wachstumsring (1206, 2106) und einen zweiten Wachstumsring (1206, 2106) enthält, wobei der Überlappungsabschnitt (2104) des ersten Wachstumsrings radial innerhalb der Ausrichtungsfläche (2112) des zweiten Wachstumsrings positioniert ist.

5. Die Pflanzenzuchtvorrichtung (100) nach Anspruch 1, wobei der Zuchtring (1206, 2106) ferner umfasst:
mindestens eine Lasche (2108), die sich an einem unteren Abschnitt radial vom Zuchtring weg erstreckt; und
mindestens eine Kerbe (2110), die axial durch die Zuchtringwand entlang eines oberen Abschnitts des Zuchtrings definiert ist.

6. Die Pflanzenzuchtvorrichtung (100) nach Anspruch 5, wobei die Pflanzenaufnahmevorrichtung (204) einen ersten Wachstumsring (1206, 2106) und einen zweiten Wachstumsring (1206, 2106) enthält, wobei die Lasche (2108) des ersten Wachstumsrings so dimensioniert ist, dass sie zumindest teilweise innerhalb der Kerbe (2110) des zweiten Wachstumsrings positioniert werden kann, um einen Teil der Pflanzenaufnahmevorrichtung (204) zu bilden, wobei die Lasche (2108) innerhalb der Kerbe (2110) positioniert ist, um den ersten Wachstumsring drehbar mit dem zweiten Wachstumsring zu koppeln.

7. Die Pflanzenzuchtvorrichtung (100) nach Anspruch 1, wobei der Wachstumsring (1206, 2106) ferner umfasst:
eine Ausrichtungsfläche (2112), die an einem oberen Abschnitt des Wachstumsrings um die Pflanzenachse (1204) herum definiert ist und einen ersten Durchmesser aufweist;
einen Überlappungsabschnitt (2104), der an einem unteren Abschnitt des Wachstumsrings um die Pflanzenachse (2104) definiert ist und einen zweiten Durchmesser aufweist;
zumindest eine Lasche (2108), die sich radial vom Wachstumsring am unteren Abschnitt weg erstreckt; und
mindestens eine Kerbe (2110), die axial durch die Wand des Wachstumsrings entlang des oberen Abschnitts des Wachstumsrings definiert ist.

8. Die Pflanzenzuchtvorrichtung (100) nach Anspruch 7, wobei ferner:
die Pflanzenaufnahmevorrichtung (204) einen ersten Wachstumsring (1206, 2106) und einen zweiten Wachstumsring (1206, 2106) enthält;
der Überlappungsabschnitt (2104) des ersten Wachstumsrings radial innerhalb der Ausrichtungsfläche (2112) des zweiten Wachstumsrings positioniert ist; und
die Lasche (2108) des ersten Wachstumsrings so dimensioniert ist, dass sie zumindest teilweise innerhalb der Kerbe (2110) des zweiten Wachstumsrings positioniert ist, um einen Teil der Pflanzengehäuseanordnung (204) zu bilden;
wobei der Überlappungsabschnitt (2104) die Ausrichtungsfläche (2112) berührt, um die koaxiale Ausrichtung zwischen dem ersten und dem zweiten Wachstumsring aufrechtzuerhalten, und die Lasche (2108) innerhalb der Kerbe (2110) positioniert ist, um den ersten Wachstumsring drehbar mit dem zweiten Wachstumsring zu koppeln.

9. Die Pflanzenzuchtvorrichtung (100) nach Anspruch 1, wobei die Pflanzengehäuseanordnung (204) über einen zwischen dem Bodenabschnitt und einer Grundplatte (206) angeordneten Reibungsminderungsmechanismus (1214) drehbar mit der Pflanzenzuchtvorrichtung verbunden ist.

10. Die Pflanzenzuchtvorrichtung (100) nach Anspruch 1, die ferner eine Tür (118) umfasst, die von einer geschlossenen Position in eine geöffnete Position übergeht, wobei die Tür (118) in der geschlossenen Position eine Öffnung in der Frontplatte (112) im Wesentlichen von der Umgebung isoliert und in der geöffneten Position den Zugang zum Innenraum durch die Öffnung ermöglicht.

11. Die Pflanzenzuchtvorrichtung (100) nach Anspruch 10, die ferner umfasst:
einen Sensor (208) an der Tür (118), der mit einer Steuereinheit (726) kommuniziert, um die Position der Tür zu ermitteln; und
eine Lichtquelle (304), die so positioniert ist, dass sie Licht für die Pflanzengehäuseanordnung (204) bereitstellt;
wobei die Helligkeit der Lichtquelle (304) reduziert wird, wenn die Steuerung mit dem Sensor (208) feststellt, dass sich die Tür (118) in der geöffneten Position befindet.

12. Die Pflanzenzuchtvorrichtung (100) nach Anspruch 1, die ferner umfasst:
ein Fluidsystem, das selektiv Fluid zum inneren Fluidkanal (1202) des Wachstumsrings (1206, 2106) zuführt, wobei das Fluidsystem eine Pumpe (716) aufweist und zumindest einen Zerstäuber, eine UV-Lampe, Anodensonden oder einen Entionisierer umfasst; und
ein elektrisches System, das den Füllstand einer Flüssigkeit in dem Flüssigkeitssystem überwacht, wobei das elektrische System einen Füllstandssensor (710) und einen Durchflussmesser (718) umfasst.

## Revendications

1. Un appareil de culture de plantes (100), comprenant :
un premier et un deuxième panneaux latéraux (104, 106), un panneau arrière (110), un panneau avant (112), un panneau supérieur (108) et un panneau inférieur (114) séparant un intérieur (202) d'un environnement extérieur ;
un ensemble de logement de plantes (204) positionné au moins partiellement dans l'intérieur (202), l'ensemble de logement de plantes (204) comprenant au moins un anneau de croissance (1206, 2106) qui est positionné entre une partie inférieure (1212) et un couvercle supérieur (1210) pour définir un passage de fluide intérieur (1202) entre ceux-ci, la au moins une bague de croissance définissant une pluralité d'ouvertures pour plantes (2202)
les ouvertures pour plantes (2202) étant configurées pour recevoir un pot de plante afin de positionner au moins une partie du pot de plante au moins partiellement à l'intérieur du passage de fluide intérieur (1202), dans lequel les ouvertures pour plantes sont formées à partir de parties de la paroi de la bague de croissance (2204) qui sont radialement élargies à partir d'un axe de plante (1204) et forment un motif circulaire en forme de vague dans la paroi de l'anneau de croissance (2204) le long du périmètre ;
un tiroir (120, 602) positionné au niveau d'une partie inférieure de l'appareil de culture de plantes (100), le tiroir pouvant coulisser entre une position fermée et une position ouverte, dans lequel le tiroir est configuré pour recevoir un réservoir destiné à contenir un fluide ;
une pompe (716) qui aspire de manière sélective le fluide du réservoir et distribue le fluide dans le passage de fluide intérieur (1202) défini en partie par l'anneau de croissance (1206); et
un mécanisme de verrouillage qui empêche de manière sélective le tiroir (120, 602) de passer de la position fermée à la position ouverte ; dans lequel le mécanisme de verrouillage empêche le tiroir de passer de la position fermée à la position ouverte lorsque la pompe (716) distribue le fluide dans le passage intérieur (1202).

2. L'appareil de culture de plantes (100) selon la revendication 1, dans lequel l'ensemble de logement de plantes (204) contient une pluralité d'anneaux de croissance (1206, 2106) couplés les uns aux autres.

3. L'appareil de culture de plantes (100) selon la revendication 1, dans lequel l'anneau de croissance (1206, 2106) comprend en outre :
une surface d'alignement (2112) définie au niveau d'une partie supérieure de l'anneau de croissance (1206, 2106) autour de l'axe de la plante (1204) et ayant un premier diamètre ; et
une section de chevauchement (2104) définie au niveau d'une partie inférieure de l'anneau de croissance autour de l'axe de la plante (1204) et ayant un deuxième diamètre ;
dans lequel le premier diamètre est légèrement supérieur au deuxième diamètre.

4. L'appareil de culture de plantes (100) selon la revendication 3, dans lequel l'ensemble de logement de plantes (204) contient un premier anneau de croissance (1206, 2106) et un deuxième anneau de croissance (1206, 2106), la section de chevauchement (2104) de la première bague de croissance étant positionnée radialement à l'intérieur de la surface d'alignement (2112) de la deuxième bague de croissance.

5. L'appareil de culture de plantes (100) selon la revendication 1, dans lequel l'anneau de croissance (1206, 2106) comprend en outre :
au moins une languette (2108) s'étendant radialement à partir de l'anneau de croissance sur une partie inférieure ; et
au moins une encoche (2110) définie axialement à travers la paroi de l'anneau de croissance le long d'une partie supérieure de l'anneau de croissance.

6. L'appareil de culture de plantes (100) selon la revendication 5, dans lequel l'ensemble de logement de plantes (204) contient un premier anneau de croissance (1206, 2106) et un deuxième anneau de croissance (1206, 2106), la languette (2108) de la première bague de croissance étant dimensionnée pour être positionnée au moins partiellement à l'intérieur de l'encoche (2110) de la deuxième bague de croissance afin de former une partie de l'ensemble de logement de plante (204), dans lequel la languette (2108) est positionnée à l'intérieur de l'encoche (2110) pour coupler en rotation la première bague de croissance à la deuxième bague de croissance.

7. L'appareil de culture de plantes (100) selon la revendication 1, dans lequel l'anneau de croissance (1206, 2106) comprend en outre :
une surface d'alignement (2112) définie au niveau d'une partie supérieure de l'anneau de croissance autour de l'axe de la plante (1204) et ayant un premier diamètre ;
une section de chevauchement (2104) définie au niveau d'une partie inférieure de l'anneau de croissance autour de l'axe de la plante (2104) et ayant un deuxième diamètre ;
au moins une languette (2108) s'étendant radialement à partir de l'anneau de croissance sur la partie inférieure ; et
au moins une encoche (2110) définie axialement à travers la paroi de l'anneau de croissance le long de la partie supérieure de l'anneau de croissance.

8. L'appareil de culture de plantes (100) selon la revendication 7, dans lequel en outre:
l'ensemble de logement de plantes (204) contient un premier anneau de croissance (1206, 2106) et un deuxième anneau de croissance (1206, 2106) ;
la section de chevauchement (2104) de la première bague de croissance est positionnée radialement à l'intérieur de la surface d'alignement (2112) de la deuxième bague de croissance ; et
la languette (2108) de la première bague de croissance est dimensionnée pour être positionnée au moins partiellement à l'intérieur de l'encoche (2110) de la deuxième bague de croissance afin de former une partie de l'ensemble de logement de plante (204) ;
dans lequel la section de chevauchement (2104) est en contact avec la surface d'alignement (2112) afin de maintenir l'alignement coaxial entre le premier et le deuxième anneaux de croissance, et la languette (2108) est positionnée à l'intérieur de l'encoche (2110) afin de coupler en rotation le premier anneau de croissance au deuxième anneau de croissance.

9. L'appareil de culture de plantes (100) selon la revendication 1, dans lequel l'ensemble de logement de plantes (204) est couplé de manière rotative à l'appareil de culture de plantes par l'intermédiaire d'un mécanisme de réduction de friction (1214) positionné entre la partie inférieure et une plaque de base (206).

10. L'appareil de culture de plantes (100) selon la revendication 1, comprenant en outre une porte (118) qui passe d'une position fermée à une position ouverte, dans lequel, dans la position fermée, la porte (118) isole sensiblement une ouverture dans le panneau avant (112) de l'environnement environnant et, dans la position ouverte, la porte permet d'accéder à l'intérieur à travers l'ouverture.

11. L'appareil de culture de plantes (100) selon la revendication 10, comprenant en outre:
un capteur (208) sur la porte (118) qui communique avec un contrôleur (726) pour identifier la position de la porte ; et
une source lumineuse (304) positionnée pour fournir de la lumière à l'ensemble de logement de plantes (204) ;
dans lequel la luminosité de la source lumineuse (304) est réduite lorsque le contrôleur identifie que la porte (118) est en position ouverte à l'aide du capteur (208).

12. L'appareil de culture de plantes (100) selon la revendication 1, comprenant en outre:
un système de fluide qui fournit de manière sélective du fluide au passage de fluide intérieur (1202) de l'anneau de croissance (1206, 2106), le système de fluide comprenant une pompe (716) et au moins un élément parmi un nébuliseur, une lumière UV, des sondes d'anode ou un déioniseur ; et
un système électrique qui surveille le niveau d'un fluide dans le système de fluide, le système électrique comprenant un capteur de niveau de fluide (710) et un débitmètre (718).
